# DEMANDE DE BREVET EUROPEEN

(11) **EP 1 337 114 A1**
(43) Date de publication de la demande: **20.08.2003**
(21) Numéro de dépôt: 02080251.8
(22) Date de dépôt: 11.12.2002
(51) Int. Cl.: H04N 7/26, H04N 7/36, H04N 7/30, H04N 7/50

(54) **Procédé de décodage de signaux vidéo codés**

(30) Priorité: 20.12.2001 FR 0116578
(71) Demandeur: Koninklijke Philips Electronics N.V., 5621 BA Eindhoven (NL)
(72) Inventeur: Barrau, Eric, 75008 Paris (FR); Gatepin, Philippe, 75008 Paris (FR)
(74) Mandataire: Chaffraix, Jean

(57) **Abrégé**

L'invention concerne un procédé de décodage vidéo pour décoder un ensemble de signaux vidéo comprenant un signal de base et au moins un signal d'amélioration, et délivrer un signal de sortie décodé, ledit procédé de décodage comprenant :
- une première étape de décodage pour décoder le signal de base et délivrer un signal de base décodé, ladite première étape étant associée à une étape de compensation pour compenser en mouvement une image de référence,
- une deuxième étape de décodage pour décoder les signaux d'amélioration et délivrer des signaux d'amélioration décodés,
- une étape de combinaison pour combiner le signal de base décodé et les signaux d'amélioration décodés afin de délivrer ledit signal de sortie décodé,

Le procédé de décodage est remarquable en ce qu'il comprend une étape de sélection pour sélectionner, en fonction d'un signal de sélection, le signal sur lequel prélever ladite image de référence, la sélection étant faite sur ledit signal de base décodé et sur ledit signal de sortie décodé.

Utilisation : Décodeur vidéo

## Description

### DOMAINE DE L'INVENTION

L'invention concerne un procédé de décodage vidéo pour décoder un ensemble de signaux vidéo comprenant un signal de base et au moins un signal d'amélioration, et délivrer un signal de sortie décodé, ledit procédé de décodage comprenant :
- une première étape de décodage pour décoder le signal de base et délivrer un signal de base décodé, ladite première étape étant associée à une étape de compensation pour compenser en mouvement une image de référence,
- une deuxième étape de décodage pour décoder les signaux d'amélioration et délivrer des signaux d'amélioration décodés,
- une étape de combinaison pour combiner le signal de base décodé et les signaux d'amélioration décodés afin de délivrer ledit signal de sortie décodé.

L'invention a de nombreuses applications dans les décodeurs de signaux vidéo.

### ARRIERE PLAN TECHNOLOGIQUE DE L'INVENTION

Pour transmettre des données de type vidéo sur un réseau de communication, il est possible de faire appel à une technique de compression vidéo générant à partir d'un signal vidéo d'entrée, un ensemble de signaux vidéo compressés de qualité décroissante. Cet ensemble de signaux, dit de type échelonnable (« scalable » en anglais), se compose d'un signal de base codé selon la norme MPEG-2 (appelé « base layer » en anglais), et d'au moins un signal d'amélioration (appelé « enhancement layer » en anglais). Lorsque ces signaux d'amélioration sont transmis conjointement au signal de base, ils enrichissent, par addition sur le signal de base décodé, la qualité du signal vidéo décodé de sortie.

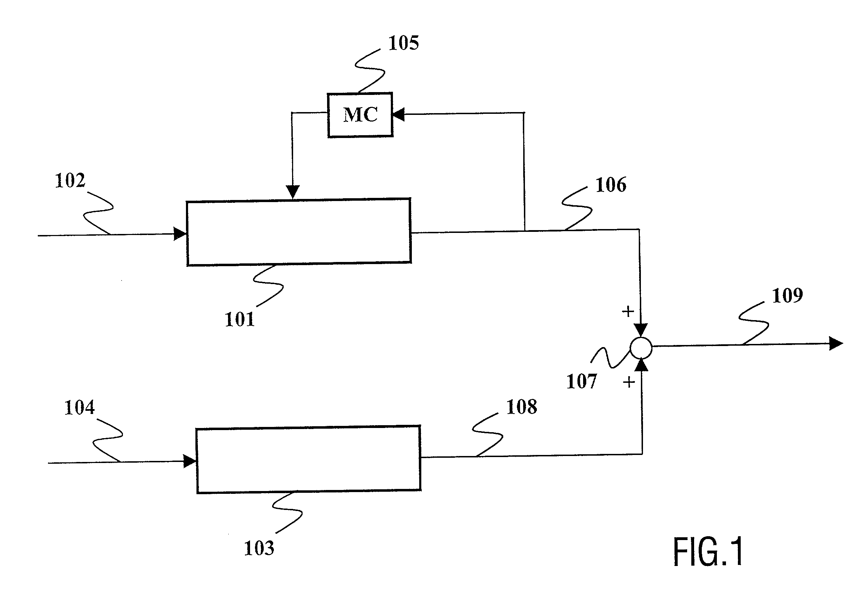

Le brevet référencé WO 0126381 décrit un procédé de décodage pour décoder un signal de base transmis avec des signaux d'amélioration. Ce procédé de décodage, représenté à la figure 1 de la présente demande, comprend une étape de décodage 101 pour décoder le signal de base 102, et une étape de décodage 103 pour décoder des signaux d'amélioration 104. L'étape de décodage 101 est associée à une étape de compensation 105 pour compenser en mouvement une image de référence prélevée sur le signal de base décodé 106. L'image de référence ainsi compensée en mouvement est additionnée à une image du signal de base codé 102. Ce procédé de décodage comprend en outre une étape de combinaison 107 pour additionner le contenu du signal de base décodé 106 et le contenu des signaux d'amélioration décodés 108, afin de délivrer un signal de sortie décodé 109.

Ce procédé de décodage connu de l'état de la technique présente un certain nombre de limitations.

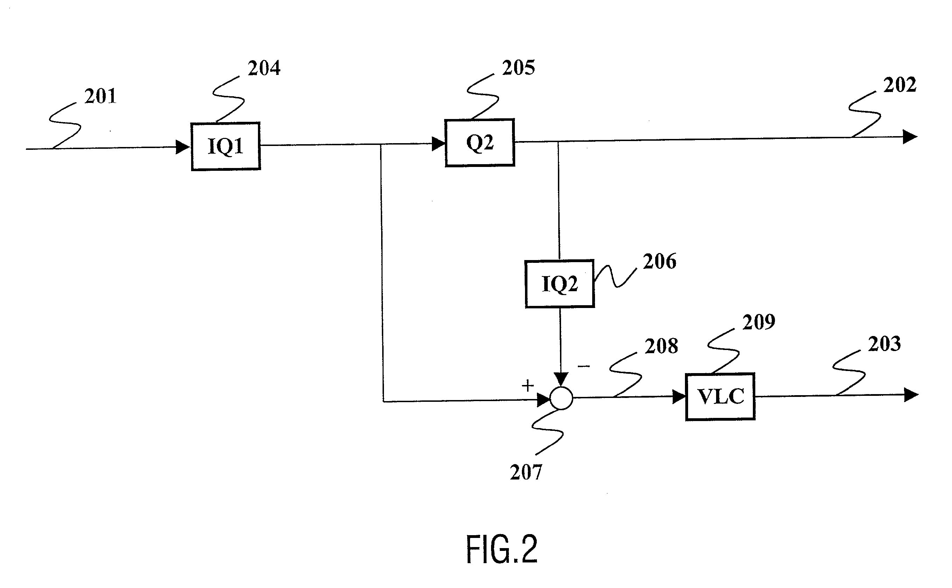

Dans son fonctionnement, ce procédé de décodage utilise comme image de référence, une image prélevée à la sortie de l'étape de décodage 101. Le choix de cette image de référence n'est pas optimal lorsque le signal de base 102 est issu d'un codage utilisant une image de référence différente d'une image décodée prélevée sur le signal de base décodé. En effet, considérons le cas d'un ensemble de signaux générés par un procédé de codage de type transcodage représenté à la figure 2. Ce procédé de transcodage génère à partir d'un signal d'entrée vidéo compressé 201, compressé par exemple selon la norme MPEG-2, un signal de base 202 et un signal d'amélioration 203. Pour cela, le signal d'entrée 201, quantifié par un facteur Q1 lors de son codage (non-représenté), subit une étape de déquantification 204 par un facteur Q1, puis une étape de quantification 205 par un facteur Q2, avec Q2 > Q1. L'étape de quantification 205 permet de générer ledit signal de base 202. Via une étape de déquantification 206, l'erreur de quantification 208 de l'étape 205 est calculée par l'étape de soustraction 207. L'erreur de quantification 208 subit alors une étape de codage entropique 209 pour générer ledit signal d'amélioration 203. Ce procédé de transcodage se caractérise par une absence de compensation de mouvement pour le codage du signal de base. Cela a pour conséquence que l'image de référence théorique pour le codage du signal de base est l'image d'entrée décodée du signal 201. Si un tel ensemble de signaux 202-203 est décodé par un procédé de décodage tel que celui connu de l'état de la technique, l'image de référence utilisée pour le décodage du signal de base sera une image prélevée sur le signal de sortie de ladite étape de décodage 101, et pas sur le signal de sortie décodé 109 comme cela devrait être le cas. En effet, le signal de sortie décodé 109 est théoriquement identique au signal d'entrée 201. Dans ce cas, l'image de référence utilisée dans la compensation de mouvement n'est pas correcte si bien qu'une dérive en qualité se produit dans le signal de sortie décodé 109. Le procédé de décodage connu de l'état de la technique génère donc un signal de sortie décodé de mauvaise qualité, et de qualité décroissante d'image en image.

### RESUME DE L'INVENTION

L'invention a pour but de proposer un procédé de décodage vidéo pour décoder un ensemble de signaux composés d'un signal de base et d'un ensemble de signaux d'amélioration, ledit procédé de décodage conduisant à un signal de sortie décodé de meilleure qualité.

L'invention a aussi pour but de proposer un procédé de codage et de transcodage vidéo pour générer un ensemble de signaux composés d'un signal de base et d'un ensemble de signaux d'amélioration destiné à être décodés par un décodeur selon l'invention.

Pour cela, le procédé de décodage est remarquable en ce qu'il comprend une étape de sélection pour sélectionner, en fonction d'un signal de sélection, le signal sur lequel prélever ladite image de référence, la sélection étant faite sur ledit signal de base décodé et sur ledit signal de sortie décodé.

Dans la mesure où le signal de base peut avoir été encodé par un procédé de codage ou de transcodage utilisant des images de référence prélevées sur différents signaux, par exemple un signal de base issu d'un codage avec ou sans compensation de mouvement, cette étape de sélection permet au décodeur de s'adapter aux caractéristiques de codage du signal de base codé. Ainsi, lorsque le décodeur selon l'invention reçoit un signal de base issu d'un codage (ou d'un transcodage) par exemple sans compensation de mouvement, l'étape de sélection est en mesure de sélectionner avantageusement comme image de référence une image prélevée sur le signal de sortie décodé. Par contre, lorsque le décodeur selon l'invention reçoit un signal de base issu d'un codage (ou d'un transcodage) par exemple avec compensation de mouvement, l'étape de sélection est en mesure de sélectionner avantageusement comme image de référence une image prélevée sur le signal de base décodé. L'invention permet donc la sélection du signal sur lequel prélever l'image de référence utilisée dans la sous-étape de compensation de mouvement. De cette façon, par un choix approprié de la sélection, il n'y a plus de dérive de qualité, et la qualité du signal de sortie décodé devient optimale.

Pour que l'étape de sélection sélectionne, via ledit signal de sélection, le bon signal sur lequel prélever l'image de référence permettant d'optimiser la qualité du signal vidéo de sortie, l'invention prévoit deux solutions.

Selon une première solution, le procédé de décodage est remarquable en ce qu'il comprend :
- une première étape de mesure de qualité pour mesurer la qualité dudit signal de sortie décodé lorsque ladite image de référence est prélevée sur ledit signal de base décodé, afin de générer une première mesure de qualité,
- une deuxième étape de mesure de qualité pour mesurer la qualité dudit signal de sortie décodé lorsque ladite image de référence est prélevée sur ledit signal de sortie décodé, afin de générer une deuxième mesure de qualité,
- une étape de comparaison pour comparer la première mesure de qualité et la deuxième mesure de qualité,
- une étape de génération pour générer ledit signal de sélection à partir du résultat de ladite étape de comparaison, ledit signal de sélection reflétant le signal sur lequel prélever l'image de référence pour obtenir la meilleure qualité du signal de sortie décodé.

Les étapes de- mesure de qualité permettent de choisir la meilleure image de référence pour optimiser la qualité du signal vidéo de sortie sans avoir à connaître les caractéristiques de codage du signal de base codé reçu par le décodeur. Le décodeur selon l'invention est donc polyvalent puisqu'il peut être utilisé avec des signaux de base ayant été codés (ou transcodés) par rapport à des images de référence prélevées sur des signaux différents, tout en garantissant une qualité optimale du signal décodé de sortie.

Afin de proposer une solution à moindre coût en terme de ressources de calcul, les étapes de mesure de qualité peuvent avantageusement être effectuées sur un nombre limité d'images pour déterminer si les images de référence doivent être prélevées sur le signal de base décodé ou sur le signal de sortie décodé. La même sélection pour l'image de référence est alors faite pour les images suivantes à décoder en faisant l'hypothèse que les caractéristiques de codage du signal de base codé ne changent pas.

Selon une deuxième solution, le procédé de décodage est remarquable en ce qu'il comprend :
- une étape d'extraction de données pour extraire dans lesdits signaux d'amélioration, des données indiquant le signal sur lequel les images de référence utilisées pour la génération du signal de base ont été prélevées,
- une étape de génération pour générer ledit signal de sélection à partir desdites données, ledit signal de sélection reflétant le signal sur lequel l'image de référence doit être prélevée pour obtenir la meilleure qualité du signal de sortie décodé.

Cette solution est avantageuse puisque le signal de sélection est directement extrait du contenu des signaux d'amélioration codés. Cela conduit à une solution économique en terme de ressources de calcul car aucune étape de mesure de qualité ni de comparaison ne sont nécessaires pour déterminer le signal sur lequel prélever l'image de référence à utiliser pour l'étape de compensation du signal de base.

Cette deuxième solution nécessite cependant un codage particulier des signaux vidéo reçus par le décodeur selon l'invention.

Pour cela, l'invention concerne aussi un procédé de codage vidéo pour coder un signal vidéo d'entrée, ledit procédé de codage comprenant :
- une première étape de codage pour coder et générer un signal de base codé à partir du signal vidéo d'entrée, ledit signal de base codé étant codé par rapport à une image de référence,
- une deuxième étape de codage pour coder et générer au moins un signal d'amélioration, Le procédé de codage selon l'invention est remarquable en ce qu'il comprend une étape d'insertion pour insérer des données dans lesdits signaux d'amélioration, lesdites données indiquant le signal sur lequel les images de référence utilisées pour la génération du signal de base ont été prélevées.

L'invention concerne également un décodeur vidéo comprenant un ensemble de moyens pour la mise en oeuvre des différentes étapes du procédé de décodage présenté précédemment.

L'invention concerne également un codeur vidéo comprenant un ensemble de moyens pour la mise en oeuvre des différentes étapes du procédé de codage présenté précédemment.

L'invention concerne également l'utilisation d'un décodeur vidéo tel que décrit précédemment dans un boîtier de réception, ledit boîtier de réception ayant pour objet de délivrer un signal de sortie décodé à partir d'un ensemble de signaux vidéo comprenant un signal de base et au moins un signal d'amélioration.

L'invention concerne également un programme d'ordinateur comprenant des instructions de code de programme pour exécuter les différentes étapes du procédé de décodage présenté précédemment lorsque ledit programme est exécuté sur un processeur de signal.

L'invention concerne également un programme d'ordinateur comprenant des instructions de code de programme-pour exécuter les différentes étapes du procédé de codage présenté précédemment lorsque ledit programme est exécuté sur un processeur de signal.

L'invention concerne également un signal vidéo comprenant un signal de base codé et au moins un signal d'amélioration codé, ledit signal vidéo reflétant les caractéristiques techniques dudit procédé de codage. Le signal vidéo est remarquable en ce qu'il comprend des données spécifiques indiquant le signal sur lequel les images de référence utilisées pour la génération du signal de base ont été prélevées.

### BREVE DESCRIPTIONS DES DESSINS

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :
La figure 1 décrit un décodeur connu de l'état de la technique pour décoder un signal de base et des signaux d'amélioration,
La figure 2 décrit un codeur connu de l'état de la technique pour générer un signal de base et des signaux d'amélioration,
La figure 3 décrit un décodeur selon l'invention pour décoder un signal de base et un signal d'amélioration,
La figure 4 décrit une première solution d'un procédé de décodage selon l'invention,
La figure 5 décrit une deuxième solution d'un procédé de décodage selon l'invention,
La figure 6 décrit un codeur selon l'invention pour générer un signal de base et des signaux d'amélioration.

### DESCRIPTION DE MODES DE REALISATION DE L'INVENTION

Pour des raisons de clarté, les explications de l'invention seront données en considérant le décodage d'un ensemble de signaux comprenant un signal de base et un signal d'amélioration. L'invention ne se limite bien sûr pas au cas d'un seul signal de d'amélioration, mais peut également s'appliquer à un ensemble de signaux comprenant plusieurs signaux d'amélioration. Si tel est le cas, les signaux d'amélioration sont décodés individuellement, puis additionnés au signal de base décodé.

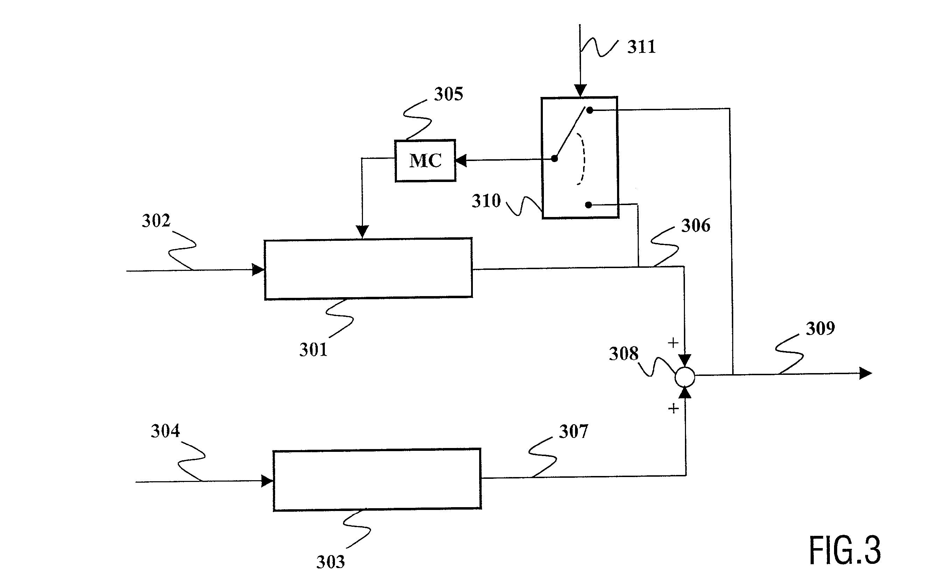

La figure 3 décrit un décodeur selon l'invention pour décoder un signal de base 302 et un signal d'amélioration 304.

Ce décodeur comprend une étape de décodage 301 pour décoder un signal de base 302. Le principe de fonctionnement de l'étape de décodage 301 est analogue à celui d'un procédé de décodage selon une norme de la famille de normes MPEG. En effet, l'étape de décodage 301 est associée à une étape de compensation 305 pour compenser en mouvement une image de référence précédemment décodée. L'image ainsi compensée en mouvement par l'étape 305 est additionnée à une image du signal de base 302 pour définir une nouvelle image décodée sur le signal 306.

Le décodeur comprend aussi une étape de décodage 303 pour décoder le signal d'amélioration 304 afin de générer le signal d'amélioration décodé 307. Le décodage du signal d'amélioration 304 ne nécessite pas de compensation de mouvement puisqu'il correspond à un résidu de codage issu du codage ayant généré le signal de base 302. Par exemple, dans le cas d'un signal d'amélioration généré par le procédé de codage décrit à la figure 2, l'étape de décodage 303 comprend une sous-étape de décodage entropique.

Une étape de combinaison 308 permet d'additionner le contenu du signal de base décodé 306 et le contenu du signal d'amélioration décodé 307, afin de délivrer le signal de sortie décodé 309.

Le décodeur comprend une étape de sélection 310 permettant, via un signal de sélection 311, de sélectionner le signal sur lequel prélever ladite image de référence utilisée par l'étape de compensation 305. Suivant la valeur du signal de sélection 311, l'image de référence est soit prélevée sur le signal de base décodé 306, soit prélevée sur le signal de sortie décodé 309.

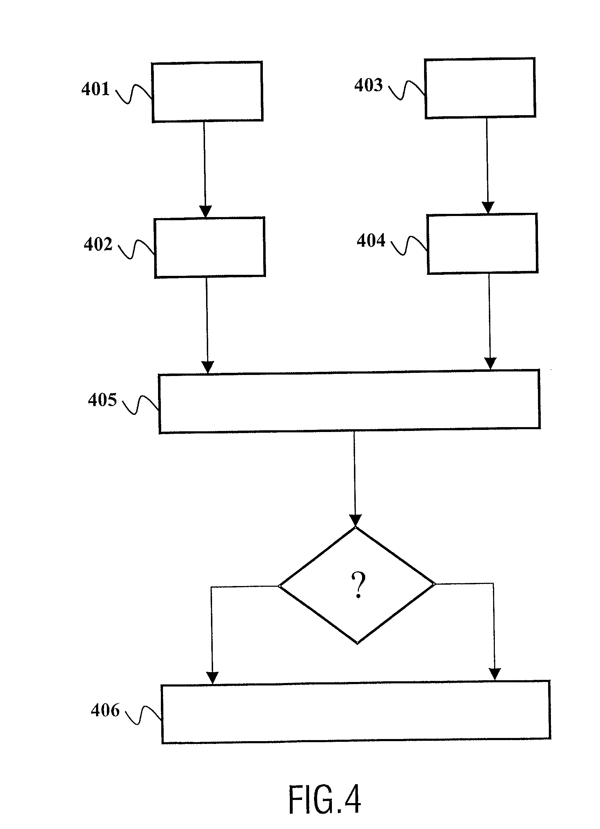

La figure 4 décrit une première solution d'un procédé selon l'invention pour déterminer sur quel signal l'image de référence à utiliser pour le décodage du signal de base 102 doit être prélevée. Ce procédé permet en particulier de définir la valeur du signal de sélection 311 utilisé pour commander l'étape de sélection 310 précédemment décrite par la figure 3.

Ce procédé est basé sur une analyse comparative de la qualité vidéo du signal de sortie décodé 309, d'une part lorsque l'image de référence utilisée pour l'étape de compensation de mouvement 305 est prélevée sur le signal de base décodé 306, et d'autre part lorsque l'image de référence utilisée pour l'étape de compensation de mouvement 305 est prélevée sur le signal de sortie décodé 309.

Pour une même image d'entrée du signal de base 302, ladite image d'entrée étant de type prédit, deux mesures de qualité sont effectuées. Pour cela, le procédé selon l'invention comprend :
- une première étape de décodage 401 pour décoder l'image du signal de base 302 en prenant pour image de référence une image prélevée sur le signal de base décodé 306 précédemment décodé par l'étape de décodage 301,
- une première étape de mesure de qualité 402 du signal de sortie décodé 309 lorsque ledit signal de base décodé 306 est issu de la première étape de décodage 401,
- une deuxième étape de décodage 403 pour décoder l'image du signal de base 302 en prenant pour image de référence une image prélevée sur le signal de sortie décodé 309 précédemment décodée,
- une deuxième étape de mesure de qualité 404 du signal de sortie décodé 309 lorsque ledit signal de base décodé 306 est issu de la deuxième étape de décodage 403.

Le choix du signal sur lequel est prélevée l'image de référence entraîne une plus ou moins bonne compensation de mouvement par l'étape 305. En particulier, si la compensation de mouvement utilise une image de référence non optimale, la qualité du signal de sortie décodé 309 sera mauvaise et de nombreux blocs de taille 8*8 seront visuellement perceptibles. Ainsi, et de façon avantageuse, les étapes de mesure de qualité 402 et 404 consistent chacune en une mesure de « l'effet de bloc » dans le signal de sortie décodé 309. Ce type de mesure peut notamment consister en un filtrage dérivateur appliqué sur les frontières d'une grille imaginaire de taille 8*8 dans les images du signal de sortie décodé 309, l'ensemble des valeurs obtenues par le filtrage dérivateur étant cumulées sur l'ensemble de l'image décodée de sortie 309 pour générer une valeur caractérisant la qualité de cette image de sortie décodée. Dans ce cas, une mesure de qualité a une valeur d'autant plus élevée que la qualité vidéo est mauvaise. De cette façon, l'étape de mesure de qualité 402 génère une première mesure de qualité, et l'étape de mesure de qualité 404 génère une deuxième mesure de qualité.

Le procédé prévoit en outre une étape de comparaison 405 pour comparer la première mesure de qualité et la deuxième mesure de qualité.

Si la première mesure de qualité a une valeur plus élevée que la deuxième mesure de qualité, l'étape de génération 406 génère un signal de sélection 311 reflétant que l'image de référence doit être prélevée sur le signal de sortie décodé 309.

A contrario, si la première mesure de qualité a une valeur plus faible que la deuxième mesure de qualité, l'étape de génération 406 génère un signal de sélection 311 reflétant que l'image de référence doit être prélevée sur le signal de base décodé 306.

Selon une variante de l'invention, les étapes de mesure de qualité 402 et 403 ne sont plus faites sur une même image du signal de sortie décodé obtenue par deux modes de décodage, mais sur un ensemble d'images successives du signal de sortie décodé. Ce procédé amélioré calcule alors un premier ensemble de mesures de qualité lorsque l'étape de décodage 401 utilise comme image de référence une image prélevée sur le signal de base décodé 306, et un deuxième ensemble de mesures de qualité lorsque l'étape de décodage 403 utilise comme image de référence une image prélevée sur le signal de base décodé 309. La pente de ces ensembles de mesures de qualité étant d'autant plus faible que la dérive de qualité vidéo du signal de sortie est faible, l'étape de comparaison 405 compare avantageusement la pente de l'évolution de ces deux ensembles de mesures de qualité en fonction du rang de l'image dans les ensemble d'images.

Si la pente du premier ensemble de mesures a une valeur plus élevée que la deuxième mesure de qualité, l'étape de génération 406 génère un signal de sélection 311 reflétant que l'image de référence doit être prélevée sur le signal de sortie décodée 309.

A contrario, si la pente du premier ensemble de mesures a une valeur plus faible que la deuxième mesure de qualité, l'étape de génération 406 génère un signal de sélection 311 reflétant que l'image de référence doit être prélevée sur le signal de base décodée 306.

Ce procédé amélioré permet de définir la valeur du signal de sélection 311 de façon plus fiable, ce qui est préférable si le signal de sélection 311 est défini une seule fois, par exemple au début du décodage des signaux 302-304 puis appliqué à l'identique à l'étape de sélection 310 pour l'ensemble des images restant à décoder.

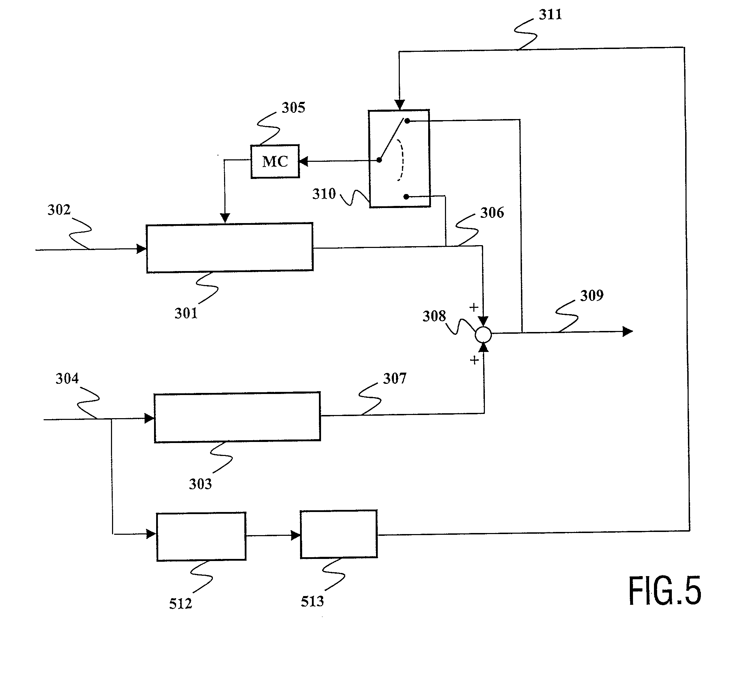

La figure 5 décrit une deuxième solution d'un procédé selon l'invention pour déterminer sur quel signal prélever l'image de référence à utiliser pour le décodage du signal de base. Ce procédé permet en particulier de définir la valeur du signal de sélection 311 utilisé pour commander l'étape de sélection 310 précédemment décrite par la figure 3.

Cette solution est avantageuse puisqu'elle ne fait intervenir qu'une étape de traitement de données 512. Cette étape 512 consiste à extraire du signal'd'amélioration 304 des données spécifiques indiquant le signal sur lequel les images de référence utilisées pour la génération du signal de base 302 ont été prélevées. Après extraction, lesdites données spécifiques sont utilisées par l'étape de génération 513 permettant de générer le signal de sélection 311.

Ainsi, si les données spécifiques extraites par l'étape 512 indiquent que le signal de base 302 est issu d'un codage d'un signal primaire en utilisant des images de référence prélevées sur ledit signal primaire, le signal de sélection 311 est tel qu'il va entraîner la sélection par l'étape de sélection 310 d'une image de référence prélevée sur le signal de sortie décodé 309.

A contrario, si les données spécifiques extraites par l'étape 512 indiquent que le signal de base 302 est issu d'un codage d'un signal primaire en utilisant des images de référence prélevées sur ledit signal de base, le signal de sélection 311 est tel qu'il va entraîner la sélection par l'étape de sélection 310 d'une image de référence prélevée sur le signal de base décodé 306.

Cette solution nécessite cependant la génération d'un signal de base et d'un signal d'amélioration contenant de telles données spécifiques.

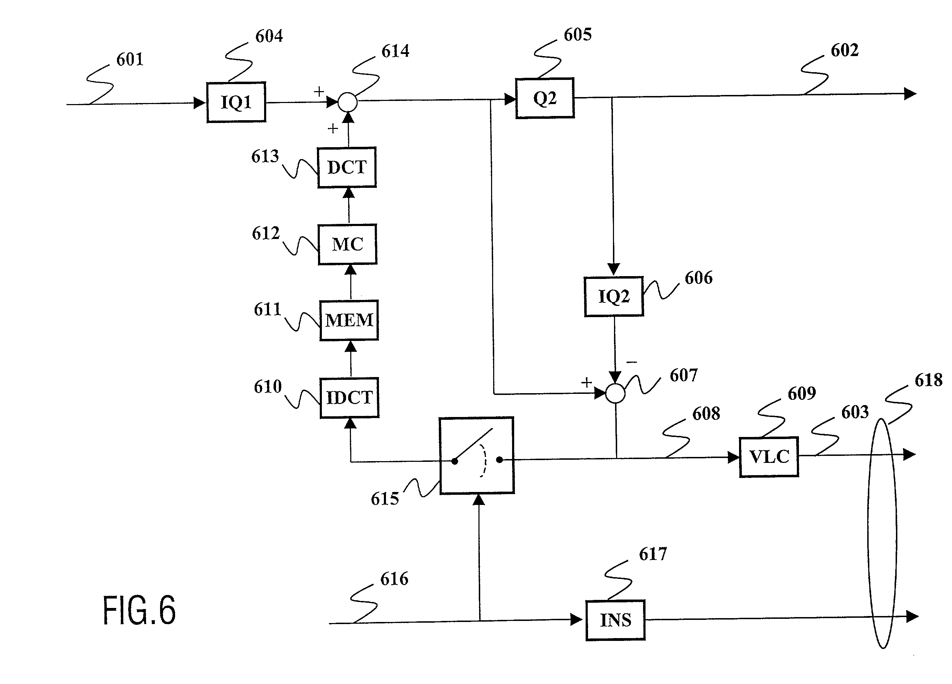

La figure 6 illustre un procédé de transcodage selon l'invention permettant de générer à partir d'un signal vidéo codé 601, par exemple issu d'un codage selon une norme de la famille de normes MPEG, un ensemble de signaux comprenant un signal de base 602 et au moins un signal d'amélioration 603. Ce procédé de transcodage comprend :
- une étape de déquantification 604 du signal d'entrée 601 par un facteur Q1,
- une étape de quantification 605 par un facteur Q2 permettant de générer le signal de base codé 602,
- une étape de déquantification 606 permettant, en association avec l'étape de soustraction 607, de générer une erreur de codage 608,
- une étape de codage entropique 609 permettant de générer le signal d'amélioration 603,
- une étape de compensation de mouvement comprenant en série une sous-étape de transformée inverse cosinus discrète 610, une sous-étape de mémorisation 611 pour mémoriser une erreur de codage d'une image précédemment codée, une sous-étape de compensation de mouvement 612 pour compenser en mouvement ladite erreur de codage précédemment codée, une sous-étape de transformée cosinus discrète 613 pour générer une erreur de codage compensée en mouvement additionnée, via l'étape d'addition 614, au signal délivré par l'étape 604.
Le procédé de transcodage selon l'invention comprend en outre une étape de sélection 615 commandée par un signal de sélection 616. Suivant la valeur donnée au signal de sélection 616, cette étape de sélection permet au procédé de transcodage de générer ledit signal de base codé 602 avec ou sans compensation de mouvement. Lorsque la compensation de mouvement est désactivée, l'étape de sélection 615 est équivalente à un interrupteur ouvert, tandis que lorsque la compensation de mouvement est activée, l'étape de sélection 615 est équivalente à un interrupteur fermé.

Parallèlement, le signal de sélection 616 est envoyé à une étape d'insertion de données 617 permettant d'insérer, dans le contenu du signal d'amélioration 603 (ou de plusieurs signaux d'amélioration le cas échéant), des données spécifiques indiquant le signal sur lequel les images de référence utilisées pour la génération du signal de base 602 ont été prélevées.

Dans le cas du procédé de transcodage de la figure 6, lorsque la compensation de mouvement est activée, les données spécifiques insérées reflètent que le signal de base a été généré en prélevant des images de référence sur le signal de base 602. Par contre, lorsque la compensation de mouvement est désactivée, les données spécifiques insérées reflètent que le signal de base a été généré en prélevant des images de référence sur le signal d'entrée 601.

De façon avantageuse, ces données spécifiques sont insérées dans les entêtes d'images du signal d'amélioration 603. L'association desdites données spécifiques et du signal d'amélioration 603 forme un signal d'amélioration spécifique 618 destiné à être décodé avantageusement par un décodeur selon l'invention et tel que décrit précédemment.

Le procédé d'insertion de données spécifiques indiquant le signal sur lequel les images de référence utilisées pour la génération du signal de base ont été prélevées a seulement été présenté via un procédé de transcodage. Cependant, ce procédé d'insertion de données spécifiques peut aussi être appliqué à un codeur vidéo générant, à partir d'un signal vidéo d'entrée non codé selon une norme de la famille de normes MPEG, un signal de base et au moins un signal d'amélioration.

Les procédés de codage et de décodage selon l'invention peuvent être respectivement implémentés dans un codeur vidéo et un décodeur vidéo. Pour cela, il est envisagé de faire appel d'une part à des éléments de type « hardware » (par exemple de type mémoire, processeurs de signaux ...), mais aussi à des éléments de type logiciel (par exemple des programmes d'ordinateur comprenant des instructions de code de programme pour exécuter les différentes étapes du procédé de codage et de décodage lorsque les programmes sont exécutés sur un ou plusieurs processeur de signal).

Un codeur et un décodeur vidéo selon l'invention peuvent être utilisés dans un appareil électronique de type boîtier de réception de signaux vidéo pour la télévision (appelé « set-top box » en anglais).

Le procédé de décodage selon l'invention peut aussi avantageusement être utilisé dans le cas où des signaux d'amélioration ont été perdus lors de leur transmission vers le décodeur selon l'invention. Dans ce cas, l'invention permet de sélectionner parmi le signal de base décodé et le signal décodé de sortie, le signal dans lequel prélever l'image de référence conduisant à la meilleure compensation de mouvement, donc à la meilleure qualité vidéo pour le signal décodé de sortie.

## Revendications

1. Procédé de décodage vidéo pour décoder un ensemble de signaux vidéo comprenant un signal de base et au moins un signal d'amélioration, et délivrer un signal de sortie décodé, ledit procédé de décodage comprenant :
- une première étape de décodage pour décoder le signal de base et délivrer un signal de base décodé, ladite première étape étant associée à une étape de compensation pour compenser en mouvement une image de référence,
- une deuxième étape de décodage pour décoder les signaux d'amélioration et délivrer des signaux d'amélioration décodés,
- une étape de combinaison pour combiner le signal de base décodé et les signaux d'amélioration décodés afin de délivrer ledit signal de sortie décodé,
**caractérisé en ce que** ledit procédé de décodage comprend une étape de sélection pour sélectionner, en fonction d'un signal de sélection, le signal sur lequel prélever ladite image de référence, la sélection étant faite sur ledit signal de base décodé et sur ledit signal de sortie décodé.

2. Procédé de décodage vidéo selon la revendication 1 **caractérisé en ce qu'il** comprend :
- une première étape de mesure de qualité pour mesurer la qualité dudit signal de sortie décodé lorsque ladite image de référence est prélevée sur ledit signal de base décodé, afin de générer une première mesure de qualité,
- une deuxième étape de mesure de qualité pour mesurer la qualité dudit signal de sortie décodé lorsque ladite image de référence est prélevée sur ledit signal de sortie décodé, afin de générer une deuxième mesure de qualité,
- une étape de comparaison pour comparer la première mesure de qualité et la deuxième mesure de qualité,
- une étape de génération pour générer ledit signal de sélection à partir du résultat de ladite étape de comparaison, ledit signal de sélection reflétant le signal sur lequel prélever l'image de référence pour obtenir la meilleure qualité du signal de sortie décodé.

3. Procédé de décodage vidéo selon la revendication 1 **caractérisé en ce qu'il** comprend :
- une étape d'extraction de données pour extraire dans lesdits signaux d'amélioration des données indiquant le type de compensation de mouvement utilisée pour le codage dudit signal de base,
- une étape de génération pour générer ledit signal de sélection à partir desdites données, ledit signal de sélection reflétant le signal sur lequel l'image de référence doit être prélevée pour obtenir la meilleure qualité du signal de sortie décodé.

4. Procédé de codage vidéo pour coder un signal vidéo d'entrée, ledit procédé de codage comprenant
- une première étape de codage pour coder et générer un signal de base codé à partir du signal vidéo d'entrée, ledit signal de base codé étant codé par rapport à une image de référence,
- une deuxième étape de codage pour coder et générer au' moins un signal d'amélioration,
**caractérisé en ce que** le procédé de codage comprend une étape d'insertion pour insérer des données dans lesdits signaux d'amélioration, lesdites données indiquant le signal sur lequel les images de référence utilisées pour la génération du signal de base ont été prélevées.

5. Décodeur vidéo pour décoder un ensemble de signaux vidéo comprenant un signal de base et au moins un signal d'amélioration, et délivrer un signal de sortie décodé, ledit décodeur de décodage comprenant :
- des moyens de décodage pour d'une part décoder le signal de base afin de délivrer un signal de base décodé, lesdits moyens de décodage du signal de base étant associés à des moyens de compensation pour compenser en mouvement une image de référence, et pour d'autre part décoder les signaux d'amélioration afin de délivrer des signaux d'amélioration décodés,
- des moyens de combinaison pour combiner le signal de base décodé et les signaux d'amélioration décodés afin de délivrer ledit signal de sortie décodé,
**caractérisé en ce que** ledit décodeur vidéo comprend des moyens de sélection pour sélectionner, en fonction d'un signal de sélection, le signal sur lequel prélever ladite image de référence, la sélection étant faite sur ledit signal de base décodé et sur ledit signal de sortie décodé.

6. Codeur vidéo pour coder un signal vidéo d'entrée, ledit codeur vidéo comprenant des moyens de codage pour d'une part coder et générer un signal de base codé à partir du signal vidéo d'entrée, ledit signal de base codé étant codé par rapport à une image de référence, et pour d'autre part coder et générer au moins un signal d'amélioration, **caractérisé en ce que** le codeur vidéo comprend des moyens d'insertion pour insérer des données dans lesdits signaux d'amélioration, lesdites données indiquant le signal sur lequel les images de référence utilisées pour la génération du signal de base ont été prélevées.

7. Utilisation d'un décodeur vidéo selon la revendication 5 dans un boîtier de réception de signaux vidéo, ledit boîtier de réception ayant pour objet de délivrer un signal de sortie décodé à partir d'un ensemble de signaux vidéo comprenant un signal de base et au moins un signal d'amélioration.

8. Programme d'ordinateur comprenant des instructions de code de programme pour exécuter les différentes étapes du procédé de décodage selon la revendication 1 lorsque ledit programme est exécuté sur un processeur de signal.

9. Programme d'ordinateur comprenant des instructions de code de programme pour exécuter les différentes étapes du procédé de codage selon la revendication 4 lorsque ledit programme est exécuté sur un processeur de signal.

10. Signal vidéo comprenant un signal de base codé et au moins un signal d'amélioration codé, signal vidéo **caractérisé en ce qu'il** comprend des données spécifiques indiquant le signal sur lequel les images de référence utilisées pour la génération du signal de base ont été prélevées.
